# EUROPEAN PATENT SPECIFICATION

(11) **EP 0 504 175 B1**
(45) Date of publication and mention of the grant of the patent: **13.09.1995**
(21) Application number: 90917486.4
(22) Date of filing: 04.12.1990
(51) Int. Cl.: H04H 1/00, H04N 7/08

(54) **METHOD OF LABELLING A BROADCAST SIGNAL**
VERFAHREN ZUR KENNZEICHNUNG VON RUNDFUNKSIGNALEN
PROCEDE DE MARQUAGE D'UN SIGNAL DE DIFFUSION

(30) Priority: 06.12.1989 GB 8927615
(43) Date of publication of application: 23.09.1992
(73) Proprietor: BRITISH BROADCASTING CORPORATION, London W1A 1AA (GB)
(72) Inventor: CHAMBERS, John, Philip Research Department, Tadworth Surrey KT20 6NP (GB)
(74) Representative: Garratt, Peter Douglas
(86) International application number: GB9001888
(87) International publication number: WO9108626

(56) References cited:
- EP-A- 0 214 326
- EP-A- 0 328 440
- 5th Conference and Exhibition on Television Techniques, Budapest, 12-14 June 1990, vol. I, J.P. CHAMBERS: "A domestic television programme delivery service based on teletext", pages 23-30
- Electronic Components and Applications, vol. 8, no. 1, 1987, Eindhoven, NL; A.LENTZER et al.: "Integrated video programming system (VPS) decoder", pages 39-44

## Description

The invention relates to apparatus and a method for labelling a broadcast signal in which a programme label corresponding to the current programme being broadcast is transmitted, periodically, with the broadcast signal. Such programme labels are used, for example, to control domestic receiving equipment such as video cassette recorders.

There exist already PDC method in which programme labels are transmitted frequently and, in some cases, at regular intervals during the programme. In the case of television, the labels may be carried by a dedicated line in the vertical blanking period (as in the German VPS system) or as part of the teletext service as, for example, the broadcast service data packed defined for CCIR system B teletext. Where the broadcast programmes are radio programmes, the labels may be carried by the RDS (radio data) system.

The transmitted labels are, as indicated above, used to control receiving equipment, in particular, video cassette recorders, which are caused to respond to particular programme labels and to operate while those labels are being transmitted. In essence, a video cassette machine may record incoming programmes only while predetermined labels are being transmitted. More sophisticated video recorders may also establish a 'time window' during which the equipment may respond to a particular label and may incorporate a 'flywheel' method of operation so that the occasional loss of label in the received signal does not cause recording to be interrupted or to cut off prematurely.

One existing system, described in United Kingdom Patent application 2223899 filed 15th September 1988 and published on 18th April 1990 describes a system of conditional access to a PDC service in which the programme labels are varied continuously and systematically. Only equipment having a corresponding key and/or sequence generator can recognise the sequence of labels identifying a given programme. Another such system, is described in European patent application 0214326. This latter system is of some complexity and utilises information transmitted with teletext pages to update programme times and modify the start-uptime in the event of changes of programme.

The method of labelling a broadcast signal in accordance with the invention is characterised in that a plurality of special labels are introduced into the sequence of programme labels transmitted periodically with the broadcast signal, the special labels being transmitted in place of some of the labels identifying the current programme; the special labels indicating that an event is to occur after a predetermined interval following transmission thereof.

Preferably, the special label is a label for the next programme to be broadcast and is transmitted repeatedly at predetermined intervals prior to the event to be indicated.

This arrangement may permit the start or finish of a programme to be located with greater accuracy than hitherto and may provide advance warning of a change of programme. This, in turn, permits time for the mechanical start-up of a video cassette recorder before recording of the programme commences. The system of the invention also has the advantage that it can be compatible with conventional equipment intended simply to identify a change of label and, hence, of programme with no anticipation.

A programme delivery control system in accordance with the invention will now be described in detail, by way of example, with reference to the drawings, in which:
Figure 1 is a schematic diagram showing the programme labels at a programme change in a conventional PDC system; and
Figure 2 is a schematic diagram showing the programme labels at a programme change in the PDC system of the invention.

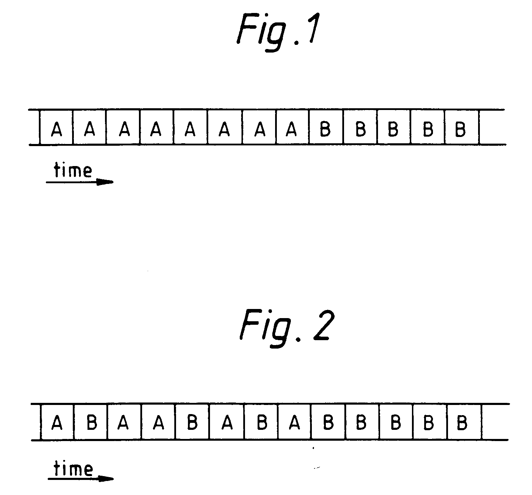

Figure 1 shows the changing sequence of programme labels at a change in a conventional programme delivery control system from a programme identified by label A to a programme identified by means of label B. The sequence of labels around the change is ...AAABBB....

Typically, the decoder at a video cassette recorder is set up to respond to three correct recognitions of the label for a desired programme so that, if labels are transmitted at one second intervals, as is usual, the recorder will start to respond to the change of programme label two to three seconds after the second prgramme, identified by label B, begins. Similarly, the stop operation, which would be initiated by three consecutive incorrect labels, would be subject to the same delay. In practice, the delay is likely, in fact, to be greater because the mechanical response time of the receiving equipment must be added to the delay due to recognition of the label change.

Figure 2 illustrates a programme delivery control system in accordance with the invention in which a special label is introduced into the sequence of programme labels transmitted to signal the imminence of a change in the programme transmitted.

As shown, the special label is a single label "B" identifying the next following programme which is transmitted repeatedly and at predetermined intervals prior to the actual change in programme transmission. After the actual programme change, the label B is transmitted continuously at one second intervals until the next programme change is imminent.

A decoder at the receiving equipnent programmed to recognise this pattern of labels would ascertain that the programme change is to occur seven seconds after the first label B is transmitted. This would be confirmed two seconds later when the second label B is received. This prior warning would permit receiving equipment such as a video cassette recorder to be "run-up" with a view to recording from the actual programme change, within a tolerance of one second. The receiving equipment could be constructed to cease the recording operation if the expected sequence of labels B did not follow. Similarly, a decoder programmed to recognise the sequence of labels could cause operation of the video cassette recorder to cease exactly when required (with a one second tolerance).

A conventional decoder set up simply to recognise a change in the programme label will respond in the same way as it would to a conventional sequence of programme labels at a programme change. Under very severe error conditions, i.e. the worst possible case, a conventional decoder might cause recording to stop a few seconds early.

Whilst the example described above is concerned with an imminent change of programme special labels might also be used to signal interruptions in a programme, for example, for a commercial break, and resumption of an interrupted programme. Instead of using labels indicative of the next following programme, as described, it would also be possible to use special labels of a different kind to indicate upcoming events in the transmitted programme.

## Claims

1. A method of labelling a broadcast signal in which a programme label corresponding to the current programme is broadcast, periodically, with the broadcast signal, the method being characterised in that a plurality of special labels are introduced into the periodically-broadcast sequence of programme labels, the special labels being transmitted in place of some of the programme labels identifying the current programme being broadcast, special labels indicating that an event is to occur after a predetermined interval following transmission thereof.

2. A method according to claim 1, in which the special label indicates that a programme is about to commence.

3. A method according to claim 1, in which the special label indicates that a programme is about to end.

4. A method according to claim 1 in which the special label indicates that a programme is about to be interrupted.

5. A method according to claim 1 in which the special label indicates that a programme is about to be resumed.

6. A method according to claim 2 in which the special label is a label for the programme about to commence transmitted in advance of the commencement thereof.

7. A method according to claim 3 in which the special label is a label for the next programme to be broadcast transmitted in advance of the end of a programme.

8. A broadcast receiver including means for receiving programme labels accompanying receivedprogrammes, the means for receiving including means for operating at least one function of the broadcast receiver, the broadcast receiver being characterised in that the means for receiving include means for detecting in a sequence of received programme labels the presence of a plurality of special labels transmitted in place of some of the labels identifying the current programme to indicate that an event is to occur after a predetermined interval following transmission thereof; the means for receiving operating the said function of the broadcast receiver in response to detection of the said plurality of special labels.

## Patentansprüche

1. Verfahren zur Kennzeichnung eines Rundfunksignals, in welchem eine Programmkennmarke entsprechend dem laufenden Programm periodisch mit dem Rundfunksignal gesendet wird, wobei das Verfahren dadurch gekennzeichnet ist, daß mehrere spezieller Kennmarken in die periodisch gesendete Folge von Programmkennmarken eingebracht werden, wobei die speziellen Kennmarken anstelle mancher der Programmkennmarken übertragen werden, die das laufende Programm, welches gesendet wird, identifizieren, wobei spezielle Kennmarken anzeigen, daß ein Ereignis nach einem vorbestimmten auf ihre Übertragung folgenden Intervall eintreten soll.

2. Verfahren nach Anspruch 1, in welchem die spezielle Kennmarke anzeigt, daß ein Programm dabei ist, zu beginnen.

3. Verfahren nach Anspruch 1, in welchem die spezielle Kennmarke anzeigt, daß ein Programm dabei ist, zu enden.

4. Verfahren nach Anspruch 1, in welchem die spezielle Kennmarke anzeigt, daß ein Programm dabei ist, unterbrochen zu werden.

5. Verfahren nach Anspruch 1, in welchem die spezielle Kennmarke anzeigt, daß ein Programm dabei ist, wieder aufgenommen zu werden.

6. Verfahren nach Anspruch 2, in welchem die spezielle Kennmarke eine Kennmarke für das Programm ist, welches dabei ist, zu beginnen, die vor dessen Beginn übertragen wird.

7. Verfahren nach Anspruch 3, in welchem die spezielle Kennmarke eine Kennmarke für das nächste zu sendende Programm ist, welche vor dem Ende des Programms übertragen wird.

8. Rundfunkempfänger, aufweisend eine Einrichtung zum Empfangen von Programmkennmarken, die empfangene Programme begleiten, wobei die Einrichtung zum Empfangen Einrichtungen zum Betreiben zumindest einer Funktion des Rundfunkempfängers umfassen, und der Rundfunkempfänger dadurch gekennzeichnet ist, daß die Einrichtung zum Empfangen Einrichtungen umfaßt, die in einer Folge von empfangenen Programmkennmarken das Vorhandensein einer Mehrzahl von speziellen Kennmarken erfassen, die anstelle mancher der Kennmarken übertragen werden, die das laufende Programm identifizieren, um anzuzeigen, daß ein Ereignis nach einem vorbestimmten auf deren Übertragung folgenden Intervall eintreten soll; wobei die Einrichtung zum Empfangen die besagte Funktion des Rundfunkempfängers als Reaktion auf die Detektion der Mehrzahl von speziellen Kennmarken betreibt.

## Revendications

1. Un procédé de marquage d'un signal de diffusion dans lequel une marque de programme qui correspond au programme actuel est diffusée, périodiquement, avec le signal de diffusion, le procédé étant caractérisé en ce qu'une série de marques spéciales est introduite dans la séquence diffusée périodiquement de marques des programmes, les marques spéciales étant transmises au lieu des marques de programme qui identifient le programme actuel en cours de diffusion, des marques spéciales indiquant qu'un événement doit se produire après un intervalle prédéterminé suivant leur transmission.

2. Un procédé selon la revendication 1, dans lequel la marque spéciale indique qu'un programme va bientôt commencer.

3. Un procédé selon la revendication 1, dans lequel la marque spéciale indique qu'un programme va bientôt finir.

4. Un procédé selon la revendication 1, dans lequel la marque spéciale indique qu'un programme va bientôt être interrompu.

5. Un procédé selon la revendication 1 dans lequel la marque spéciale indique qu'un programme va bientôt être repris.

6. Un procédé selon la revendication 2, dans lequel la marque spéciale est une marque qui concerne le programme qui va bientôt commencer et est transmise à l'avance de son commencement.

7. Un procédé selon la revendication 3, dans lequel la marque spéciale est une marque qui concerne le prochain programme qui sera diffusé et est transmise à l'avance de la fin d'un programme.

8. Un récepteur de diffusion qui inclut des moyens récepteurs de marques de programmes qui accompagnent les programmes reçus, les moyens récepteurs incluant des moyens de mise en oeuvre d'au moins une fonction du récepteur de diffusion, le récepteur de diffusion étant caractérisé en ce que les moyens récepteurs incluent des moyens qui détectent, dans une séquence de marques de programmes reçues, la présence d'une série de marques spéciales transmises en substitution à certaines des marques d'identification du programme actuel de manière à indiquer qu'un événement doit se produire après un intervalle prédéterminé suivant leur transmission; les moyens récepteurs mettant en oeuvre ladite fonction du récepteur de diffusion en réponse à la détection de ladite série de marques spéciales.
